# EUROPEAN PATENT SPECIFICATION

(11) **EP 4 647 735 B1**
(45) Date of publication and mention of the grant of the patent: **04.11.2026**
(21) Application number: 23915571.6
(22) Date of filing: 10.08.2023
(51) Int. Cl.: G01L 13/00, G21C 9/004, G21D 1/02, G21D 3/04, G21F 7/015, G21D 1/00

(54) **NEGATIVE PRESSURE CENTRALIZED MONITORING DEVICE FOR RADIOACTIVE CONTROLLED AREAS OF NUCLEAR POWER PLANT**
ZENTRALE UNTERDRUCKÜBERWACHUNGSVORRICHTUNG FÜR DEN RADIOAKTIVEN KONTROLLBEREICH EINES KERNKRAFTWERKS
DISPOSITIF DE SURVEILLANCE CENTRALISÉ À PRESSION NÉGATIVE POUR ZONE DE CONTROLE RADIOACTIF DE CENTRALE NUCLÉAIRE

(30) Priority: 09.01.2023 CN 202310028903
(43) Date of publication of application: 12.11.2025
(73) Proprietor: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzen, Guangdong 518026 (CN)
(72) Inventor: PENG, Yongsen, Shenzhen, Guangdong 518124 (CN); DU, Pengyu, Shenzhen, Guangdong 518124 (CN); ZENG, Xianbin, Shenzhen, Guangdong 518124 (CN); LIU, Zhengjie, Shenzhen, Guangdong 518124 (CN); SU, Xiuli, Shenzhen, Guangdong 518124 (CN); WANG, Chunlin, Shenzhen, Guangdong 518124 (CN); CHEN, Jinglong, Shenzhen, Guangdong 518124 (CN); HUANG, Dongshan, Shenzhen, Guangdong 518124 (CN); XIAO, Zhou, Shenzhen, Guangdong 518124 (CN)
(74) Representative: Westphal, Mussgnug & Partner, Patentanwälte mbB
(86) International application number: PCT/CN2023/112351
(87) International publication number: WO 2024/148810

(56) References cited:
- CN-A- 103 231 774
- CN-A- 107 833 648
- CN-A- 109 915 980
- CN-A- 112 682 891
- CN-A- 114 315 103
- CN-A- 114 315 103
- CN-A- 116 222 872
- CN-U- 201 765 083
- CN-U- 201 765 083
- CN-U- 204 178 730
- CN-U- 210 719 519
- CN-U- 217 716 756
- JP-A- 2012 137 316
- "THE NET DEVICE. \PLANT DESCRIPTION ED - Cho S; Ahn M-Y; Akiba M; Feng K; Ibarra A; Merrill B J", FUSION ENGINEERING AND DESIGN, ELSEVIER SCIENCE PUBLISHERS, AMSTERDAM, NL, vol. 21, no. 1, 1 February 1993 (1993-02-01), pages 53 - 106, XP000364366, ISSN: 0920-3796, DOI: 10.1016/0920-3796(93)90098-3

## Description

### FIELD

The invention relates to the field of nuclear-grade instruments and controlled equipment in nuclear power plants, and more specifically, it relates to a negative pressure centralized monitoring device for a radioactive controlled areas of a nuclear power plant.

### BACKGROUND

During normal and accident operation of nuclear power plant, the radioactive controlled areas of each nuclear island building of nuclear power plant needs to maintain a certain negative pressure relative to the outdoor environment, so as to realize the dynamic containment of airborne radioactive substances and prevent uncontrolled leakage and discharge of airborne radioactive substances.

In the following, the term negative pressure is to be understood as the pressure difference form a higher pressure region to a lower pressure region; this term does not refer to absolute pressures.

The negative pressure maintenance function of the radioactive controlled areas of each building is mainly achieved by monitoring the pressure difference between the area and the outdoor atmosphere, and adjusting the air supply and exhaust volume of the ventilation and purification system according to the pressure difference signal. The outdoor atmosphere pressure sampling point of negative pressure monitoring instruments in the controlled areas will be affected by atmosphere fluctuation (such as outdoor wind). As the negative pressure maintained in the controlled areas is only -100Pa, which is equivalent to the order of magnitude of pressure change caused by outdoor atmosphere fluctuation, the outdoor atmosphere fluctuation has a significant influence on the measurement results of the negative pressure instruments, which leads to the unstable adjustment and operation of the ventilation system. At the same time, in order to monitor the pressure difference between the radioactive controlled areas of each factory building and the outdoor atmosphere, it is necessary to drill holes in the external wall of each factory building respectively to connect the sampling pipes of the pressure measuring instruments with the outdoor atmosphere, which leads to a large number of the external wall openings of the controlled areas, affecting the sealing integrity of the controlled areas boundary.

Reference is made to publication "THE NET DEVICE. \PLANT DESCRIPTION ED - Cho S; Ahn M-Y; Akiba M; Feng K; Ibarra A; Merrill B J", FUSION ENGINEERING AND DESIGN, ELSEVIER SCIENCE PUBLISHERS, AMSTERDAM, NL, vol. 21, no. 1, 1 February 1993 (1993-02-01), pages 53-106, XP000364366; as well as to the patent publications CN 201 765 083 U, CN 114 315 103 A and CN 204 178 730 U.

### SUMMARY

The technical problem to be solved by the present invention is to provide a negative pressure centralized monitoring device for the radioactive controlled areas of a nuclear power plant aiming at the above defects in the prior art. The invention is set out in the appended set of claims.

The technical scheme adopted by the invention is as follows: a negative pressure centralized monitoring device of a nuclear power plant is constructed, which includes at least one detection component, a buffer assembly, and a pipeline, wherein the pipeline includes a main pipe and at least one branch pipe; and one end of each detection component is configured to be connected to one of areas to be monitored for negative pressure through the branch pipe, and the other end of each of the detection component is connected to the main pipe through the branch pipe; the buffer assembly is arranged on the main pipe; the detection component and the buffer assembly are configured to be arranged within a nuclear power plant building, and one end of the main pipe is configured to be connected to an external atmosphere, wherein the external atmosphere refers to an outdoor environment of the nuclear power plant building.

The detection component is used for detecting a pressure difference between the areas to be monitored for negative pressure and the external atmosphere.

The buffer assembly is used for filtering out external atmosphere fluctuations.

In some embodiments, the buffer assembly includes a buffer tank for filtering out external atmosphere fluctuations.

In some embodiments, the buffer tank is provided with a first chamber, a second chamber, and a partition plate.

The first chamber is configured to be connected to the external atmosphere through the main pipe, and the second chamber is connected to the detection component through the main pipe, and the partition plate is arranged between the first chamber and the second chamber.

In some embodiments, the partition plate is provided with a communication hole to communicate the first chamber and the second chamber.

In some embodiments, the buffer assembly further includes a adjusting component, and the adjusting component includes a bypass pipe, one end of the bypass pipe is connected to the first chamber, and the other end of the bypass pipe is connected to the second chamber to communicate the first chamber and the second chamber.

In some embodiments, the adjusting component further includes a adjusting valve, and the adjusting valve is arranged on the bypass pipe to adjust the communication area between the first chamber and the second chamber.

In some embodiments, the buffer assembly further includes at least two processing components, and the processing components are connected to the first chamber to process the condensed water in the first chamber.

The processing component is connected to the second chamber to process the condensed water in the second chamber.

In some embodiments, the processing component includes a drainage pipe, a first isolation valve, a second isolation valve, and a water storage pipe.

The first isolation valve and the second isolation valve are arranged on the drainage pipe, and the water storage pipe is arranged between the first isolation valve and the second isolation valve.

In some embodiments, the water storage pipe is a variable diameter pipe, and the pipe diameter in the middle of the water storage pipe is larger than the pipe diameter at both ends of the water storage pipe.

In some embodiments, the main pipe further includes a pressure sampling pipe, and the buffer assembly is configured to be connected to the external atmosphere through the pressure sampling pipe.

In some embodiments, the detection component is a pressure detection instrument configured to detect the pressure difference between the areas to be monitored for negative pressure and the external atmosphere.

Implementation of the present invention of the negative pressure centralized monitoring device for radioactive controlled areas of a nuclear power plant provides the following beneficial effects: the device can filter out external atmosphere fluctuations to avoid the disturbance of external environment atmosphere for the detection component, and improve the accuracy of measuring the pressure difference of the detection component, so that the ventilation and purification system can accurately adjust the air supply and exhaust volume according to the pressure difference, ensure the stable operation of the ventilation and purification system, and maintain the negative pressure stability in the controlled areas, and at the same time, the device can also reduce the number of external wall openings in the controlled areas, to minimize the effect of external wall openings on the sealing of the controlled areas.

### BRIEF DESCRIPTION OF THE DRAWINGS

The present invention will be further described with reference to the attached drawings and embodiments, in which:
FIG. 1 is a schematic diagram of a negative pressure centralized monitoring device for radioactive controlled areas of a nuclear power plant in an embodiment of the present invention.
FIG. 2 is a schematic diagram of a buffer assembly in an embodiment of the present invention.

### DETAILED DESCRIPTION

In order to have a clearer understanding of the technical features, objectives and effects of the present invention, specific embodiments of the present invention will now be described in detail with reference to the attached drawings.

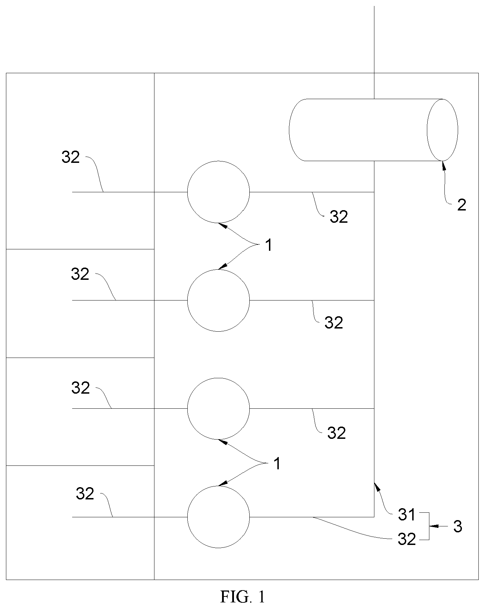

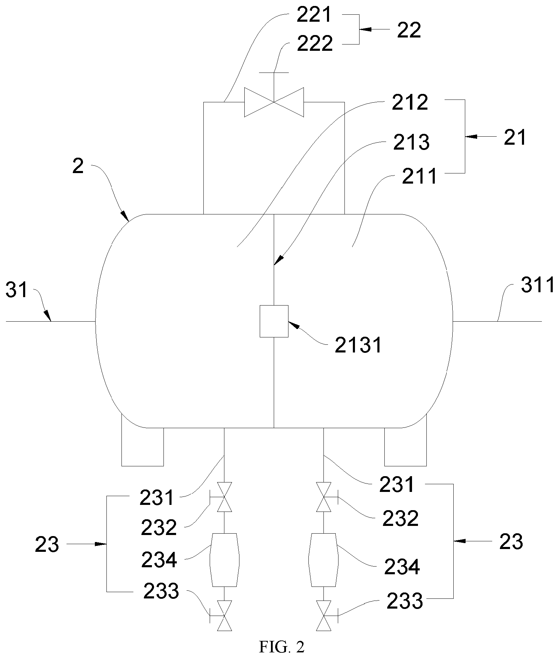

FIG. 1 and FIG. 2 show a negative pressure centralized monitoring device for radioactive controlled areas of a nuclear power plant in some embodiments of the present invention, which can be used to monitor the negative pressure in the radioactive controlled areas of nuclear power plant, realize the dynamic containment of radioactive substances, and prevent uncontrolled leakage and discharge of radioactive substances. The device can include one or more detection components 1, a buffer assembly 2 and a pipeline 3, and the pipeline 3 includes a main pipe 31 and one or more branch pipes 32.

Specifically, the nuclear power plant includes a plurality of controlled areas, and each controlled area needs one detection component 1 to monitor its negative pressure relative to the outdoor atmosphere, so the number of detection components 1 is equivalent to the number of controlled areas. Each detection component 1 is arranged indoors, and one end of each detection component 1 is connected to a controlled area through a main pipe 31, so that the detection component 1 can monitor the pressure in the controlled areas, which means that the controlled areas can be connected to the detection component 1 only by opening a hole facing the indoor inner wall, thereby reducing the number of holes opened on the exterior walls facing the external atmosphere, which further ensures the sealing of the controlled area.

At this time, the other end of each detection component 1 is connected to the main pipe 31 through the branch pipe 32, and the main pipe 31 extends from indoor to the external atmosphere, so that the detection component 1 can communicate with the external atmosphere, so that the detection component 1 can detect the pressure from external, and then the detection component 1 can obtain pressure difference between the controlled area and the external atmosphere, the controlled area can adjust the air supply and exhaust volume of the ventilation and purification system according to the signal of the pressure difference, so as to maintain the negative pressure in the controlled areas and prevent radioactive substances from leaking and processing. Understandably, both ends of each detection component 1 are connected to the branch pipes 32, which means that the number of the branch pipes 32 is twice the number of the detection components 1.

At the same time, the main pipe 31 is provided with a buffer assembly 2, the buffer assembly 2 is used to filter out external atmosphere fluctuations. The negative pressure maintenance function of the controlled areas is mainly achieved by monitoring the pressure difference between the controlled areas and the external atmosphere, and adjust the air supply and exhaust of the ventilation and purification system in the controlled areas according to the pressure difference signal, and the pressure detection of the detection component 1 on the external atmosphere will be affected by the fluctuation of the external atmosphere. And the negative pressure maintained in the controlled areas is equivalent to the order of magnitude of the pressure change caused by the external atmosphere fluctuations. If the external atmosphere fluctuations are not filtered out, it will affect the detection of the pressure difference between the controlled areas and the external atmosphere by the detection component 1, and the pressure difference will change frequently, and then the ventilation and purification system will fluctuate frequently, affecting the operation of the ventilation and purification system. In order to ensure the accuracy of the measurement results and the stable adjustment and operation of the ventilation and purification system, it is necessary to filter out the external atmosphere fluctuations.

This device can filter out the external atmosphere fluctuations, avoid detection component 1 suffering from the disturbance of the external environment, and further improve the accuracy of measuring the pressure difference of the detection component 1, so that the ventilation and purification system can accurately adjust the air supply and exhaust volume according to the pressure difference, thereby ensuring the stable operation of the ventilation and purification system, and maintain the negative pressure stability in the controlled areas. At the same time, this device can also reduce the number of external wall openings in the controlled areas, so as to reduce the influence of external wall openings on the sealing of the controlled areas.

The buffer assembly 2 includes a buffer tank 21 in some embodiments. The buffer tank 21 has a horizontal cylindrical structure and is arranged indoors, so as to avoid the influence of the external environment on the operation of the buffer tank 21. The buffer tank 21 is used for filtering out external atmosphere fluctuations, thereby maintaining the adjustment and operation stability of the ventilation and purification system in the controlled areas.

Specifically, in some embodiments, the buffer tank 21 is provided with a first chamber 211, a second chamber 212, and a partition plate 213, the first chamber 211 and the second chamber 212 are horizontally distributed on both sides of the buffer tank 21, and the partition plate 213 is arranged between the first chamber 211 and the second chamber 212 to separate the first chamber 211 from the second chamber 212. The first chamber 211 is connected to the external atmosphere through the main pipe 31, the external atmosphere enters the first chamber 211 through the main pipe 31, and the second chamber 212 is connected to the detection component 1 through the main pipe 31, so that the external atmosphere enters the detection component 1 and the detection component 1 can detect the external atmospheric pressure.

Further, in order to communicate the first chamber 211 and the second chamber 212, the partition plate 213 is provided with a communication hole 2131 for communicating the first chamber 211 and the second chamber 212, so that the external atmosphere passes through the first chamber 211 and the second chamber 212, and finally enters the detection component 1 through the main pipe 31 connecting the second chamber 212 and the detection component 1, so that the detection component 1 can detect the external atmospheric pressure. Specifically, the cross-sectional area of the main pipe 31 is much smaller than the cross-sectional area of the first chamber 211 and the second chamber 212, that is, when the external atmosphere enters the first chamber 211 through the main pipe 31, it means that the outdoor atmosphere air first enters the small space from large space, and the air volume suddenly decreases in the process, and then the air re-enters the large space from the small space, and the air volume suddenly increases in the process, so the outdoor atmosphere fluctuation will be offset in two volume changes, that is, when the outdoor atmosphere air enters the first chamber 211, the atmosphere fluctuation is offset, so as to filter out the outdoor atmosphere fluctuation and prevent it from affecting the accuracy of the detection of the detection component 1.

When the outdoor atmosphere air enters the second chamber 212 from the first chamber 211, it needs to pass through the communication hole 2131 first, at which time the air volume will suddenly decrease, and then the air will enter the second chamber 212 from the communication hole 2131, and the air volume will suddenly increase in this process, so the atmosphere fluctuation will be offset in two volume changes, that is, when the outdoor atmosphere air enters the second chamber 212 from the first chamber 211, the outdoor atmosphere fluctuation is further offset, so as to further filter out the outdoor atmosphere fluctuation and make the adjustment and operation of the ventilation and purification system more stable.

In some embodiments, the buffer assembly 2 further includes a adjusting component 22, one end of the adjusting component 22 is connected to the first chamber 211, and the other end of the adjusting component 22 is connected to the second chamber 212. The adjusting component 22 is used to adjust the communication area between the first chamber 211 and the second chamber 212, and adjust the appropriate communication area between the first chamber 211 and the second chamber 212 according to actual needs, so that when the atmosphere flows from the first chamber 211 to the first chamber 212, the sudden contraction and expansion change in the volume of the air channel can filter out the fluctuation of the outdoor atmosphere, thereby further ensuring the accuracy of the detection result of the detection component 1 and making the adjustment and operation of the ventilation and purification system more stable.

Specifically, in some embodiments, the adjusting component 22 includes a bypass pipe 221 and a adjusting valve 222, one end of the bypass pipe 221 is connected to the first chamber 211, and the other end of the bypass pipe 221 is connected to the second chamber 212. The bypass pipe 221 is used to communicate with the first chamber 211 and the second chamber 212, and the adjusting valve 222 is arranged on the bypass pipe 221 for adjusting the size of the communication area of the first chamber 211 and the second chamber 212.

Understandably, in order to keep the communication between the first chamber 211 and the second chamber 212 and further filter out the pressure difference caused by atmosphere fluctuations, the partition plate 213 separating the first chamber 211 and the second chamber 212 is provided with a communication hole 2131, so as to communicate the first chamber 211 and the second chamber 212 and make the atmosphere pass through the communication hole 2131 when flowing from the first chamber 211 to the second chamber 212. In this way, the pressure difference caused by atmosphere fluctuations can be filtered out, but the aperture of the communication hole 2131 is a fixed value, so the size of the aperture cannot be adjusted. If the aperture of the communication hole 2131 is too large, the pressure difference generated by atmosphere fluctuations cannot be completely filtered out, affecting the detection results of the detection component 1. If the aperture of the communication hole 2131 is too small, the pressure difference generated by normal environmental changes in the external atmosphere is also filtered out, and the detection component 1 is unable to accurately detect the true pressure changes in the external atmosphere, which in turn affects the adjustment of the ventilation and purification system, and may cause damage to the controlled areas.

Therefore, it is necessary to design another adjusting component 22 to communicate the first chamber 211 and the second chamber 212, and the adjusting component 22 can adjust the communication area between the first chamber 211 and the second chamber 212. When the pressure difference caused by atmosphere fluctuation is small, the adjusting valve 222 can be adjusted to make the bypass pipe 221 partially or completely unblocked, thereby expanding the communication area between the first chamber 211 and the second chamber 212, so that the pressure difference due to atmosphere fluctuations as the atmosphere flows from the first chamber 211 to the second chamber 212 is just filtered out without affecting the pressure difference due to changes in the external environment. When the pressure difference caused by atmosphere fluctuation is large, the adjusting valve 222 can be adjusted so that the bypass pipe 221 is partially unblocked or completely closed, thereby reducing the communication area between the first chamber 211 and the second chamber 212, so that the pressure difference caused by atmosphere fluctuation can be completely filtered out when the atmosphere flows from the first chamber 211 to the second chamber 212.

In some embodiments, the buffer assembly 2 further includes two or more processing components 23, the processing components 23 are connected to the first chamber 211 and the second chamber 212, respectively. The processing component 23 connected to the first chamber 211 is used for processing the condensed water in the first chamber 211, and the processing component 23 connected to the second chamber 212 is used for processing the condensed water in the second chamber 212.

Specifically, since the buffer tank 21 communicates with the outdoor atmosphere, the water vapor of the outdoor atmosphere will inevitably enter the buffer tank 21, resulting in condensed water in the first chamber 211. If the condensed water in the first chamber 211 is not discharged in time, the condensed water will accumulate in the first chamber 211, which will reduce the volume of the first chamber 211 and affect the use of the buffer assembly 2. At the same time, the accumulated condensed water may also block the main pipe 31, so that the detection component 1 is unable to detect the pressure of the atmosphere in time, thus affecting the detection results of the detection component 1, and the accuracy of the detection results cannot be guaranteed.

Similarly, when the outdoor atmosphere air flows from the first chamber 211 to the second chamber 212, since the air needs to pass through the communication hole 2131 and the bypass pipe 221 to reach the second chamber 212, since the buffer tank 21 is communicated with the outdoor atmosphere, the water vapor of the outdoor atmosphere will inevitably enter the buffer tank 21, resulting in condensed water in the second chamber 212. If the condensed water in the second chamber 212 is not discharged in time, the condensed water will accumulate in the second chamber 212, which will reduce the volume of the second chamber 212 and affect the use of the buffer assembly 2. At the same time, the accumulated condensed water may also block the main pipe 31, making it impossible for the detection component 1 to detect the atmospheric pressure in time, thus affecting the detection result of the detection component 1 and the accuracy of the detection results cannot be guaranteed.

In other embodiments, the processing component 23 is also connected to the main pipe 31 to process the condensed water in the main pipe 31. When the atmosphere air flows in the main pipe 31, the water vapor in the atmosphere may condense to form condensed water. If the condensed water in the main pipe 31 is not processed in time, the formed condensed water will block the main pipe 31, affecting the atmosphere air from the main pipe 31 into the second chamber 212, and further affecting the operation of the whole device. Therefore, it is necessary to draw out the condensed water formed in the main pipe 31 in time, that is, by having the processing component 23 connected to the main pipe 31 and having the processing component 23 process the condensed water in the main pipe 31.

In some embodiments, the processing component 23 includes a drainage pipe 231, a first isolation valve 232, a second isolation valve 233, and a water storage pipe 234. The drainage pipe 231 is connected to the first chamber 211 or the second chamber 212. In other embodiments, the drainage pipe 231 is also connected to the main pipe 31, and the drainage pipe 231 is used to introduce the condensed water formed by atmospheric condensation into the processing component 23 for process, so as to avoid the condensed water from accumulating in the first chamber 211, the second chamber 212, or the main pipe 31, thereby ensuring the normal operation of the first chamber 211, the second chamber 212, and the main pipe 31.

The first isolation valve 232 is arranged on the drainage pipe 231, and the first isolation valve 232 is close to the first chamber 211, the second chamber 212 or the main pipe 31, and is used for controlling the condensed water to flow from the first chamber 211, the second chamber 212 or the main pipe 31 to the drainage pipe 231. Opening the first isolation valve 232 allows condensed water to flow from the first chamber 211, the second chamber 212, or the main pipe 31 to the drain tube 231, preventing condensed water from accumulating in the first chamber 211, the second chamber 212, or the main pipe 31.

The second isolation valve 233 is arranged on the drainage pipe 231, the second isolation valve 233 is close to the outlet of the drainage pipe 231 and used for controlling the condensed water to flow out of the drainage pipe 231. When the second isolation valve 233 is opened, the condensed water can flow out of the drainage pipe 231, and the outlet of the drainage pipe 231 is connected to the wastewater collection system through a quick connector, so that the condensed water flowing out of the drainage pipe 231 can be discharged to the wastewater collection system, so that the condensed water can be discharged out of the device, avoiding the condensed water from affecting the operation of the first chamber 211, the second chamber 212, or the main pipe 31.

The water storage pipe 234 is arranged between the first isolation valve 232 and the second isolation valve 233 for storing the condensed water flowing from the first chamber 211, the second chamber 212 or the main pipe 31 to the drainage pipe 231. Specifically, when the device is in operation, the first isolation valve 232 is open and the second isolation valve 233 is closed. The condensed water flows into the water storage pipe 234 from the first chamber 211, the second chamber 212 or the main pipe 31 by gravity, and the water storage pipe 234 stores the condensed water flowing into the processing component 23 to prevent the condensed water from accumulating in the first chamber 211, the second chamber 212 or the main pipe 31.

When the device is in normal operation or stopped for maintenance, in order to discharge the condensed water collected by the water storage pipe 234, the first isolation valve 232 is closed and the second isolation valve 233 is opened to isolate the connection between the first chamber 211, the second chamber 212 and the main pipe 31 and the processing component 23, so as to avoid the air pressure fluctuation caused by the processing component 23 in the process of processing the condensed water, thereby affecting the operation of the first chamber 211, the second chamber 212 and the main pipe 31. The drainage pipe 231 is connected to the wastewater collection system, so that the condensed water in the water storage pipe 234 can flow to the wastewater collection system by gravity, thereby processing the condensed water, so as to prevent the condensed water from blocking the main pipe 31 and affecting the measurement accuracy.

Further, the water storage pipe 234 is a variable diameter pipe, with a larger pipe diameter in the middle part, the pipe diameter of one end close to the first isolation valve 232 is smaller than the pipe diameter of the middle part of the water storage pipe 234, the pipe diameter of one end close to the second isolation valve 233 is smaller than the pipe diameter of the middle part of the water storage pipe 234, so that the water storage pipe 234 has a larger internal space than the common pipe diameter at the same length, allowing the water storage pipe 234 to store more condensed water.

Specifically, when the pipe diameter of one end near the first isolation valve 232 is smaller than the pipe diameter of the middle part of the water storage pipe 234, it is more beneficial for the condensed water to flow from the first chamber 211, the second chamber 212, and the main pipe 31 to the water storage pipe 234, so that the water storage pipe 234 can collect the condensed water better. When the pipe diameter of one end near the second isolation valve 233 is smaller than the pipe diameter of the middle part of the water storage pipe 234, the condensed water can be better discharged from storage pipe 234 to the wastewater collection system.

Further, in some embodiments, the main pipe 31 also includes a pressure sampling pipe 311. At this time, the first chamber 211 is connected to the external atmosphere through the pressure sampling pipe 311, and the external atmosphere air enters the first chamber 211 through the pressure sampling pipe 311, and the atmosphere air in the first chamber 211 enters the second chamber 212 through the communication hole 2131 and the bypass pipe 221. The detection component 1 is connected to the second chamber 212 through the main pipe 31, so the detection component 1 can detect the pressure of the external atmosphere, the atmosphere air is continuously changing in volume as it enters the second chamber 212 from the external, making the atmosphere fluctuations to be filtered out in this process.

Further, the detection component 1 is a pressure detection instrument for detecting the pressure difference between the controlled areas and the external atmosphere. Pressure detection instrument detects the pressure in the controlled areas and the pressure of the external atmosphere at the same time to obtain the pressure difference between the two, and then sends the pressure difference signal to the ventilation and purification system in the controlled areas, and the ventilation and purification system adjusts the air supply and exhaust volume according to the received pressure difference signal, so as to maintain the negative pressure in the controlled areas at a stable value, and further ensure stable operation of the controlled areas and avoids the leakage of radioactive substances from the controlled area to the external environment.

When the device is installed, firstly, the number of pressure detection instruments equals to the number of controlled areas is prepared, all the pressure detection instruments are set indoors, and each pressure detection instrument is connected to the corresponding controlled area by a branch pipe 32, and then each pressure detection instrument is connected to the main pipe 31 by the branch pipe 32, and the main pipe 31 is connected to the buffer assembly 2, and the buffer assembly 2 is also set indoors. The first chamber 211 of the buffer assembly 2 is connected to the external atmosphere through the pressure sampling pipe 311. At this time, the adjusting component 22 communicates with the first chamber 211 and the second chamber 212, and the processing component 23 is connected to the first chamber 211 and the second chamber 212 respectively, thus completing the installation of the device.

When the device is in operation, each pressure detection instrument samples pressure from the controlled area through the branch pipe 32 connected thereto which is connected to the controlled area, and the pressure detection instrument samples pressure from the external atmosphere through the pressure sampling pipe 311, that is, the external atmosphere air enters the first chamber 211 through the pressure sampling pipe 311, and then the atmosphere air flows from the first chamber 211 through the communication hole 2131 and the adjusting component 22 to the second chamber 212, during which atmosphere fluctuations are filtered out, so that the pressure detection instrument can detect the change of atmospheric pressure more accurately, so as to obtain the accurate pressure difference, and the ventilation and purification system in the controlled areas can adjust the air supply and exhaust volume in the controlled area according to the correct pressure difference.

When condensed water is formed in the first chamber 211 and the second chamber 212, the first isolation valve 232 is opened and the second isolation valve 233 is closed. The condensed water flows from the first chamber 211 and the second chamber 212 to the drainage pipe 231, and finally flows into the water storage pipe 234, and being stored by the water storage pipe 234. When the condensed water needs to be discharged from the device, the drainage pipe 231 is connected to the wastewater collection system. Simultaneously, the first isolation valve 232 is closed and the second isolation valve 233 is opened, and the condensed water flows from the storage pipe 234 into the wastewater collection system, thereby completing the process of the condensed water.

The above is only the embodiment of the present invention, which does not limit the patent scope of the present invention which is defined by the appended claims.

## Claims

1. A negative pressure centralized monitoring device for radioactive controlled areas of a nuclear power plant, comprising at least one detection component (1), a buffer assembly (2) and a pipeline (3), wherein the pipeline (3) comprises a main pipe (31) and at least one branch pipe (32), and one end of each detection component (1) is configured to be connected to one of radioactive controlled areas to be monitored for negative pressure through the branch pipe (32), the other end of each of the detection component (1) is connected to the main pipe (31) through a branch pipe (32), the buffer assembly (2) is arranged on the main pipe (31), the detection component (1) and the buffer assembly (2) are configured to be arranged within a nuclear power plant building, and one end of the main pipe (31) is configured to be connected to an external atmosphere, wherein the external atmosphere refers to an outdoor environment of the nuclear power plant building;
the detection component (1) is used for detecting a pressure difference between the radioactive controlled areas to be monitored for negative pressure and the external atmosphere; the buffer assembly (2) is used for filtering out external atmosphere fluctuations.

2. The negative pressure centralized monitoring device of a nuclear power plant according to claim 1, wherein the buffer assembly (2) comprises a buffer tank (21) for filtering out external atmosphere fluctuations.

3. The negative pressure centralized monitoring device of a nuclear power plant according to claim 2, wherein the buffer tank (21) is provided with a first chamber (211), a second chamber (212), and a partition plate (213);
the first chamber (211) is configured to be connected to the external atmosphere through the main pipe (31), the second chamber (212) is connected to the detection component (1) through the main pipe (31), and the partition plate (213) is arranged between the first chamber (211) and the second chamber (212).

4. The negative pressure centralized monitoring device of a nuclear power plant according to claim 3, wherein the partition plate (213) is provided with a communication hole (2131) to communicate the first chamber (211) and the second chamber (212).

5. The negative pressure centralized monitoring device of a nuclear power plant according to claim 3, wherein the buffer assembly (2) further comprises a adjusting component (22), and the adjusting component (22) comprises a bypass pipe (221), one end of the bypass pipe (221) is connected to the first chamber (211), and the other end of the bypass pipe (221) is connected to the second chamber (212) to communicate the first chamber (211) and the second chamber (212).

6. The negative pressure centralized monitoring device of a nuclear power plant according to claim 5, wherein the adjusting component (22) further comprises a adjusting valve (222), and the adjusting valve (222) is arranged on the bypass pipe (221) to adjust the communication area between the first chamber (211) and the second chamber (212).

7. The negative pressure centralized monitoring device of a nuclear power plant according to claim 3, wherein the buffer assembly (2) further comprises at least two processing components (23), and the processing components (23) are connected to the first chamber (211) to process the condensed water in the first chamber (211);
the processing component (23) is connected to the second chamber (212) to process the condensed water in the second chamber (212).

8. The negative pressure centralized monitoring device of a nuclear power plant according to claim 7, wherein the processing component (23) comprises a drainage pipe (231), a first isolation valve (232), a second isolation valve (233), and a water storage pipe (234);
the first isolation valve (232) and the second isolation valve (233) are arranged on the drainage pipe (231), and the water storage pipe (234) is arranged between the first isolation valve (232) and the second isolation valve (233).

9. The negative pressure centralized monitoring device of a nuclear power plant according to claim 8, wherein the water storage pipe (234) is a variable diameter pipe, and the pipe diameter in the middle of the water storage pipe (234) is larger than the pipe diameter at both ends of the water storage pipe (234).

10. The negative pressure centralized monitoring device of a nuclear power plant according to any one of claims 1-8, wherein the main pipe (31) further comprises a pressure sampling pipe (311), and the buffer assembly (2) is configured to be connected to the external atmosphere through the pressure sampling pipe (311).

11. The negative pressure centralized monitoring device of a nuclear power plant according to claim 10, wherein the detection component (1) is a pressure detection instrument configured to detect the pressure difference between the areas to be monitored for negative pressure and the external atmosphere.

## Patentansprüche

1. Eine zentrale Unterdrucküberwachungsvorrichtung für radioaktive Kontrollbereiche eines Kernkraftwerks,
umfassend mindestens eine Detektionskomponente (1), eine Pufferanordnung (2) und eine Rohrleitung (3), wobei die Rohrleitung (3) ein Hauptrohr (31) und mindestens ein Abzweigrohr (32) umfasst und ein Ende jeder Detektionskomponente (1) dazu eingerichtet ist, über das Abzweigrohr (32) mit einem der auf Unterdruck zu überwachenden radioaktiven Kontrollbereiche verbunden zu werden, das andere Ende jeder der Detektionskomponenten (1) über ein Abzweigrohr (32) mit dem Hauptrohr (31) verbunden ist, die Pufferanordnung (2) an dem Hauptrohr (31) angeordnet ist, die Detektionskomponente (1) und die Pufferanordnung (2) dazu eingerichtet sind, innerhalb eines Kernkraftwerksgebäudes angeordnet zu werden, und ein Ende des Hauptrohrs (31) dazu eingerichtet ist, mit einer Außenatmosphäre verbunden zu werden, wobei sich die Außenatmosphäre auf eine Außenumgebung des Kernkraftwerksgebäudes bezieht;
die Detektionskomponente (1) zum Erfassen einer Druckdifferenz zwischen den auf Unterdruck zu überwachenden radioaktiven Kontrollbereichen und der Außenatmosphäre dient;
die Pufferanordnung (2) zum Herausfiltern von Schwankungen der Außenatmosphäre dient.

2. Zentrale Unterdrucküberwachungsvorrichtung eines Kernkraftwerks nach Anspruch 1, wobei die Pufferanordnung (2) einen Puffertank (21) zum Herausfiltern von Schwankungen der Außenatmosphäre umfasst.

3. Zentrale Unterdrucküberwachungsvorrichtung eines Kernkraftwerks nach Anspruch 2, wobei der Puffertank (21) mit einer ersten Kammer (211), einer zweiten Kammer (212) und einer Trennplatte (213) versehen ist;
die erste Kammer (211) dazu eingerichtet ist, über das Hauptrohr (31) mit der Außenatmosphäre verbunden zu werden, die zweite Kammer (212) über das Hauptrohr (31) mit der Detektionskomponente (1) verbunden ist und die Trennplatte (213) zwischen der ersten Kammer (211) und der zweiten Kammer (212) angeordnet ist.

4. Zentrale Unterdrucküberwachungsvorrichtung eines Kernkraftwerks nach Anspruch 3, wobei die Trennplatte (213) mit einer Verbindungsöffnung (2131) versehen ist, um die erste Kammer (211) und die zweite Kammer (212) miteinander zu verbinden.

5. Zentrale Unterdrucküberwachungsvorrichtung eines Kernkraftwerks nach Anspruch 3, wobei die Pufferanordnung (2) ferner eine Einstellkomponente (22) umfasst und die Einstellkomponente (22) ein Bypassrohr (221) umfasst, wobei ein Ende des Bypassrohrs (221) mit der ersten Kammer (211) verbunden ist und das andere Ende des Bypassrohrs (221) mit der zweiten Kammer (212) verbunden ist, um die erste Kammer (211) und die zweite Kammer (212) miteinander zu verbinden.

6. Zentrale Unterdrucküberwachungsvorrichtung eines Kernkraftwerks nach Anspruch 5, wobei die Einstellkomponente (22) ferner ein Einstellventil (222) umfasst und das Einstellventil (222) an dem Bypassrohr (221) angeordnet ist, um den Verbindungsquerschnitt zwischen der ersten Kammer (211) und der zweiten Kammer (212) einzustellen.

7. Zentrale Unterdrucküberwachungsvorrichtung eines Kernkraftwerks nach Anspruch 3, wobei die Pufferanordnung (2) ferner mindestens zwei Behandlungskomponenten (23) umfasst und die Behandlungskomponenten (23) mit der ersten Kammer (211) verbunden sind, um das Kondenswasser in der ersten Kammer (211) zu behandeln;
die Behandlungskomponente (23) mit der zweiten Kammer (212) verbunden ist, um das Kondenswasser in der zweiten Kammer (212) zu behandeln.

8. Zentrale Unterdrucküberwachungsvorrichtung eines Kernkraftwerks nach Anspruch 7, wobei die Behandlungskomponente (23) ein Ablaufrohr (231), ein erstes Absperrventil (232), ein zweites Absperrventil (233) und ein Wasserspeicherrohr (234) umfasst;
das erste Absperrventil (232) und das zweite Absperrventil (233) an dem Ablaufrohr (231) angeordnet sind und das Wasserspeicherrohr (234) zwischen dem ersten Absperrventil (232) und dem zweiten Absperrventil (233) angeordnet ist.

9. Zentrale Unterdrucküberwachungsvorrichtung eines Kernkraftwerks nach Anspruch 8, wobei das Wasserspeicherrohr (234) ein Rohr mit variablem Durchmesser ist und der Rohrdurchmesser in der Mitte des Wasserspeicherrohrs (234) größer als der Rohrdurchmesser an beiden Enden des Wasserspeicherrohrs (234) ist.

10. Zentrale Unterdrucküberwachungsvorrichtung eines Kernkraftwerks nach einem der Ansprüche 1 bis 8, wobei das Hauptrohr (31) ferner ein Druckprobenahmerohr (311) umfasst und die Pufferanordnung (2) dazu eingerichtet ist, über das Druckprobenahmerohr (311) mit der Außenatmosphäre verbunden zu werden.

11. Zentrale Unterdrucküberwachungsvorrichtung eines Kernkraftwerks nach Anspruch 10, wobei die Detektionskomponente (1) ein Druckerfassungsinstrument ist, das dazu eingerichtet ist, die Druckdifferenz zwischen den auf Unterdruck zu überwachenden Bereichen und der Außenatmosphäre zu erfassen.

## Revendications

1. Dispositif centralisé de surveillance de dépression pour des zones contrôlées radioactives d'une centrale nucléaire,
comprenant au moins un composant de détection (1), un ensemble tampon (2) et une canalisation (3), dans lequel la canalisation (3) comprend une conduite principale (31) et au moins une conduite de dérivation (32), et une extrémité de chaque composant de détection (1) est configurée pour être reliée, par l'intermédiaire de la conduite de dérivation (32), à l'une des zones contrôlées radioactives devant être surveillées en dépression, l'autre extrémité de chacun des composants de détection (1) est reliée à la conduite principale (31) par l'intermédiaire d'une conduite de dérivation (32), l'ensemble tampon (2) est disposé sur la conduite principale (31), le composant de détection (1) et l'ensemble tampon (2) sont configurés pour être disposés à l'intérieur d'un bâtiment de centrale nucléaire, et une extrémité de la conduite principale (31) est configurée pour être reliée à une atmosphère extérieure, dans lequel l'atmosphère extérieure désigne un environnement extérieur du bâtiment de centrale nucléaire ;
le composant de détection (1) est utilisé pour détecter une différence de pression entre les zones contrôlées radioactives devant être surveillées en dépression et l'atmosphère extérieure ;
l'ensemble tampon (2) est utilisé pour filtrer les fluctuations de l'atmosphère extérieure.

2. Dispositif centralisé de surveillance de dépression d'une centrale nucléaire selon la revendication 1, dans lequel l'ensemble tampon (2) comprend un réservoir tampon (21) destiné à filtrer les fluctuations de l'atmosphère extérieure.

3. Dispositif centralisé de surveillance de dépression d'une centrale nucléaire selon la revendication 2, dans lequel le réservoir tampon (21) est pourvu d'une première chambre (211), d'une deuxième chambre (212) et d'une plaque de séparation (213) ;
la première chambre (211) est configurée pour être reliée à l'atmosphère extérieure par l'intermédiaire de la conduite principale (31), la deuxième chambre (212) est reliée au composant de détection (1) par l'intermédiaire de la conduite principale (31), et la plaque de séparation (213) est disposée entre la première chambre (211) et la deuxième chambre (212).

4. Dispositif centralisé de surveillance de dépression d'une centrale nucléaire selon la revendication 3, dans lequel la plaque de séparation (213) est pourvue d'un orifice de communication (2131) pour mettre en communication la première chambre (211) et la deuxième chambre (212).

5. Dispositif centralisé de surveillance de dépression d'une centrale nucléaire selon la revendication 3, dans lequel l'ensemble tampon (2) comprend en outre un composant de réglage (22), et le composant de réglage (22) comprend une conduite de contournement (221), une extrémité de la conduite de contournement (221) étant reliée à la première chambre (211), et l'autre extrémité de la conduite de contournement (221) étant reliée à la deuxième chambre (212) afin de mettre en communication la première chambre (211) et la deuxième chambre (212).

6. Dispositif centralisé de surveillance de dépression d'une centrale nucléaire selon la revendication 5, dans lequel le composant de réglage (22) comprend en outre une vanne de réglage (222), et la vanne de réglage (222) est disposée sur la conduite de contournement (221) pour régler la section de communication entre la première chambre (211) et la deuxième chambre (212).

7. Dispositif centralisé de surveillance de dépression d'une centrale nucléaire selon la revendication 3, dans lequel l'ensemble tampon (2) comprend en outre au moins deux composants de traitement (23), et les composants de traitement (23) sont reliés à la première chambre (211) pour traiter l'eau condensée dans la première chambre (211) ;
le composant de traitement (23) est relié à la deuxième chambre (212) pour traiter l'eau condensée dans la deuxième chambre (212).

8. Dispositif centralisé de surveillance de dépression d'une centrale nucléaire selon la revendication 7, dans lequel le composant de traitement (23) comprend une conduite de drainage (231), une première vanne d'isolement (232), une deuxième vanne d'isolement (233) et une conduite de stockage d'eau (234) ;
la première vanne d'isolement (232) et la deuxième vanne d'isolement (233) sont disposées sur la conduite de drainage (231), et la conduite de stockage d'eau (234) est disposée entre la première vanne d'isolement (232) et la deuxième vanne d'isolement (233).

9. Dispositif centralisé de surveillance de dépression d'une centrale nucléaire selon la revendication 8, dans lequel la conduite de stockage d'eau (234) est une conduite à diamètre variable, et le diamètre de conduite au milieu de la conduite de stockage d'eau (234) est supérieur au diamètre de conduite aux deux extrémités de la conduite de stockage d'eau (234).

10. Dispositif centralisé de surveillance de dépression d'une centrale nucléaire selon l'une quelconque des revendications 1 à 8, dans lequel la conduite principale (31) comprend en outre une conduite de prélèvement de pression (311), et l'ensemble tampon (2) est configuré pour être relié à l'atmosphère extérieure par l'intermédiaire de la conduite de prélèvement de pression (311).

11. Dispositif centralisé de surveillance de dépression d'une centrale nucléaire selon la revendication 10, dans lequel le composant de détection (1) est un instrument de détection de pression configuré pour détecter la différence de pression entre les zones devant être surveillées en dépression et l'atmosphère extérieure.
